Europäisches Patentamt

European Patent Office

Office européen des brevets

(19)

(11) **EP 1 101 801 B1**

(12) **FASCICULE DE BREVET EUROPEEN**

(45) Date de publication et mention
de la délivrance du brevet:
**10.03.2004 Bulletin 2004/11**

(51) Int Cl.⁷: **C09C 1/00**, C01G 29/00

(21) Numéro de dépôt: **99870240.1**

(22) Date de dépôt: **22.11.1999**

(54) **Pigments à base de bismuth et procédé pour leur fabrication**

Auf Bismut basierende Pigmente und Verfahren zu deren Herstellung

Bismuth-based pigments and process for their manufacure

(84) Etats contractants désignés:
**AT BE CH CY DE DK ES FI FR GB GR IE IT LI LU
MC NL PT SE**

(43) Date de publication de la demande:
**23.05.2001 Bulletin 2001/21**

(73) Titulaire: **Gebroeders Cappelle Naamloze
Vennootschap
8930 Menen (BE)**

(72) Inventeurs:
• **Vermoortele, Frank
59700 Marq en Baroeul (FR)**

• **Buyse, Emile Joseph
7700 Mouscron (BE)**

(74) Mandataire: **Van Malderen, Michel et al
Office van Malderen
Place Reine Fabiola 6/1
1083 Bruxelles (BE)**

(56) Documents cités:
**US-A- 4 230 500        US-A- 5 958 126**

**EP 1 101 801 B1**

**Description**

<u>**Objet de l'invention**</u>

La présente invention est relative à des pigments à base de bismuth présentant des caractéristiques coloristiques et de solidité fortement améliorées.

L'invention concerne également le procédé d'obtention de ces pigments ainsi que leur application, notamment pour la coloration des peintures, des laques et/ou des matières plastiques.

<u>**Arrière-plan technologique et état de la technique**</u>

Le vanadate de bismuth est un pigment minéral jaune bien connu (US 3843554, US 4115142, JP 62277485, DE 19733584) pour colorer des plastiques et des peintures, comme catalyseur pour l'oxydation des oléfines, comme pigment renforceur des contrastes pour écran de télévision et comme indicateur réversible de température.

Cependant le vanadate de bismuth pur (dénommé PY184) ne permet pas d'obtenir directement des teintes orangées. Il existe donc actuellement un besoin évident de disposer de pigments minéraux à base de bismuth présentant d'une part un éventail de teinte allant du jaune verdâtre au jaune orangé et possédant d'autre part des solidités au moins égales ou même supérieures à celles du vanadate de bismuth pur.

Les pigments à base de vanadate de bismuth sont non toxiques, de teinte jaune vive, de grande force colorante et d'excellente opacité; ils se dispersent facilement dans leur milieu d'utilisation et ils peuvent être utilisés facilement dans toutes sortes de peintures (classiques, industrielles, en poudre).

On connaît aussi des pigments à base de bismuth de composition chimique BiOCl (US 2974053, DE 3738114, US-3917671 ). Mais ces pigments sont très différents des pigments à base de vanadate de bismuth pur, puisqu'ils sont perlescents, blanchâtres et assez peu résistants à la lumière. Ils sont principalement utilisés dans l'industrie des cosmétiques pour les effets nacrés et métallisés.

Il est également connu par la demande de brevet EP-A-632 110 de précipiter une fine couche de vanadate de bismuth sur un pigment nacré synthétique à base de mica pour obtenir des pigments très brillants, de nuance jaune, bien dispersibles.

On a également décrit dans la demande de brevet EP-A-839 874 des vanadates de bismuth basiques BiVO4.xBi2O3 dont la teinte jaune tire vers l'orangé, soit en calcinant un mélange très homogène d'oxydes de bismuth et de vanadium, soit en calcinant un précipité obtenu par voie aqueuse en présence de phosphate.

D'autres tentatives ont été faites pour obtenir des vanadates de bismuth de nuance rougeâtre, en dopant le cristal de BiVO4 avec de très petites quantités de métaux (fer, terres rares), mais dont la pureté de teinte et la force colorante laissent à désirer.

Il est également connu de cristalliser l'oxyde de bismuth Bi2O3 sous une variété spéciale β métastable en procédant très rapidement en milieu aqueux bouillant et en présence d'hydroxydes alcalins pour isoler un jaune rougeâtre.

Dans la demande de brevet EP-A-816 440, on décrit un mélange de poudres pigmentaires de vanadate de bismuth et de pigments organiques orangés, rouges ou jaune orangé pour obtenir une poudre orangée qui est un pigment de nature hybride, minéral-organique.

Il existe encore d'autres possibilités d'obtenir des composés à base de bismuth de teinte plus foncée, par exemple en calcinant des coprécipités de bismuth, de zirconium et de chrome (DE 4002943).

Cependant, tous ces essais d'obtention de pigments orangés à base de bismuth ne parviennent pas à combiner simultanément les différentes caractéristiques souhaitées pour une application d'un pigment, à savoir une teinte orangée pure, une application aisée, une non toxicité et une résistance améliorée à la lumière, aux intempéries et à la chaleur.

<u>**Buts de l'invention**</u>

La présente invention vise à obtenir de tels pigments à base de bismuth qui présentent une teinte suffisamment pure, de type jaune à orangé, et qui possèdent d'excellentes qualités de résistance.

Un autre but de la présente invention vise à fournir des pigments à base de bismuth, d'application aisée, dans les formulations conventionnelles (solvants) et modernes (en poudre, dispersées à l'eau, à haut extrait sec,...).

Un but complémentaire de la présente invention vise également à fournir un procédé de fabrication de tels pigments qui soit de conception simple et applicable industriellement.

**Éléments caractéristiques de l'invention**

L'invention concerne des pigments à base de bismuth présentant une teinte jaune à orangé, composés d'un élément jaune à base de vanadate de bismuth et d'un élément orangé à base d'oxyhalogénures de bismuth combinés très intimement.

Les pigments de l'invention répondent à la formule générale suivante :

$$Bi\ V(1-n)\ Xn\ O(4-3n),$$

ou d'une façon plus particulière à la formule :

$$(1-n)\{BiVO4\}.n\{BiOX\},$$

où :

- X désigne un halogène choisi parmi le groupe constitué par le chlore, le brome, l'iode, de préférence le brome ou l'iode, ou un mélange de ces halogénures (brome et/ou chlore et/ou iode), de préférence un mélange de brome et d'iode, ce mélange étant d'ailleurs préféré au seul brome ou au seul iode,
- n est supérieur à zéro et inférieur à un ($0 < n < 1$), de préférence compris entre 0,25 et 0,40, plus particulièrement avec n = 0,3, c'est-à-dire Bi V(0,7) X(0,3) O(3,1),
- Xn peut s'écrire [Cl(p) Br(q) I(1-p-q)]n, dans laquelle de préférence on aura :

      p compris entre 0 et 0,3,
      q compris entre 0 et 0,8 et
      p+q compris entre 0,1 et 0,8,

      plus particulièrement p = 0 et q est compris entre 0,35 et 0,55.

Par conséquent, outre la teinte orangée que ne possède pas le vanadate de bismuth pur, le mélange intime des deux composés BiVO4 et BiOX donne le pigment de l'invention [Bi V(1-n) Xn O(4-3n)] qui possède des solidités (spécialement à la lumière) améliorées par rapport aux seules propriétés connues des composés BiVO4 et BiOX utilisés seuls.

Dans le cas où n = 1, on est en présence d'oxyhalogénures de bismuth BiOX, tels que décrits dans le brevet US 4,252,570 et présentant des teintes blanches, jaunes, orangées et rouges selon les teneurs respectives en différents halogènes. Ces teneurs sont données par les coefficients p et q dans la formule suivante

$$Bi\ O\ Cl\ (p)\ Br\ (q)\ I\ (1-p-q),\ avec\ de\ préférence\ p = 0$$

Dans ce cas, au plus la teneur en iodure sera grande, au plus la teinte ira vers l'orangé et le rougeâtre. Souvent, on prend q compris entre 0,35 et 0,55, et de préférence compris entre 0,40 et 0,45.

Dans le cas où n = 0, on est en présence de vanadate de bismuth pur BiVO4 (PY184) ayant une teinte jaune verdâtre.

De manière avantageuse, les pigments de l'invention correspondant à la formule générale susmentionnée peuvent également comporter une ou plusieurs couches de stabilisation ou d'enrobage, constituées d'un ou de plusieurs dépôts successifs de ces dits oxydes, hydroxydes, hydrates, carbonates, phosphates, borates, molybdates, silicates des éléments des groupes II, III et IV, en particulier ceux susmentionnés.

Lesdits pigments peuvent comporter une ou plusieurs couches particulièrement adaptées pour améliorer les résistances à la lumière, aux intempéries et à la chaleur des pigments, en particulier une dernière couche à base de zinc et de bore permettant d'améliorer la résistance à la chaleur et permettant son application pour des matières soumises à des hautes températures.

Les différents composés minéraux utilisés dans les couches d'enrobage de l'invention peuvent également être effectués à partir d'autres éléments préférés, tels que le titane, l'aluminium, le zinc, l'antimoine, le silicium, le bore, le calcium, le zirconium, le niobium, les terres rares, en particulier le cérium, le lanthane, le néodyme, le praséodyme, le samarium, l'yttrium ou un mélange de ceux-ci. La proportion (calculée par rapport au poids total du pigment obtenu) de la ou des couches d'enrobage est généralement comprise entre 1 et 30%.

Un autre aspect de la présente invention concerne un procédé de fabrication des pigments de l'invention qui s'effectue en précipitant des oxyhalogénures de bismuth à partir d'une solution acide de nitrate de bismuth et d'une solution basique d'halogénures alcalins. Le précipité obtenu est traité ensuite par des moyens connus en soi par l'homme de l'art pour le rendre fin et cristallin. Simultanément, on prépare un vanadate de bismuth pur; on mélange en milieu aqueux les deux précipités qui se combinent intimement et l'on forme ainsi des particules pigmentaires homogènes. Les différents composés sont présentés dans des proportions de manière à correspondre aux composés préférés de l'invention identifiés dans les formules ci-dessus. De préférence, on enrobe ensuite lesdites particules formées avec une ou plusieurs couches de stabilisation (ou d'enrobage) telles que définies ci-dessus. On obtient ainsi des pigments à base de bismuth de teinte jaune orangé, très solides, très faciles à disperser et utilisables pour la coloration aussi bien des matières plastiques que des peintures de toutes sortes. L'enrobage des particules pigmentaires se fait selon le procédé bien connu de stabilisation de pigments de bismuth, par exemple par le dépôt successif des différentes couches d'enrobage tel que susmentionné, ou de préférence effectué selon le procédé décrit dans la demande de brevet européenne 99 870 193.2 incorporée ci-après par référence.

Selon une forme d'exécution préférée de l'invention, on précipite un oxyhalogénure de bismuth orange en mettant en présence deux solutions: la première est acide et contient un nitrate de bismuth, la deuxième est basique et contient des halogénures alcalins, par exemple des chlorure, bromure, iodure de métaux alcalins; de préférence on prend les sels de sodium ou de potassium. Le précipité d'oxyhalogénure de bismuth acquiert une valeur pigmentaire si on le fait mûrir par agitation en milieu acide et repos prolongé (1 à 20 h). Ensuite on peut le stabiliser légèrement en déposant à sa surface une fine couche minérale de phosphate d'aluminium.

On fabrique également un précipité de vanadate de bismuth jaune verdâtre par réaction d'une solution de nitrate de bismuth en présence d'un sel de vanadium pentavalent (par exemple selon la description du brevet WO9401497).

Quand le vanadate de bismuth est formé à un pH de l'ordre de 7,0 on ajoute la bouillie d'oxyhalogénure de bismuth préparée antérieurement et l'on poursuit l'agitation à environ 90°C pendant une durée comprise de préférence entre 10 et 180 minutes. On obtient alors une suspension de particules jaune orangé très homogènes formées par la combinaison intime du vanadate de bismuth et de l'oxyhalogénure de bismuth.

On peut isoler le pigment obtenu, mais il est de préférence ensuite enrobé avec des couches protectrices et stabilisantes afin d'obtenir un pigment jaune orangé présentant des solidités optimales. Les couches de protection sont celles utilisées communément pour les pigments minéraux et spécialement pour les vanadates de bismuth. On procède par précipitations successives de composés minéraux dérivant des éléments des groupes II, III et IV.

Les meilleurs résultats sont obtenus avec les oxydes, hydroxydes, phosphates, silicates, molybdates de calcium, de zinc, de terres rares, d'aluminium, de titane, de silicium. Pour obtenir un dépôt optimal on neutralise finalement la suspension pigmentaire à un pH de l'ordre de 7; on isole le pigment par filtration, lavage à l'eau, séchage de façon conventionnelle (100 à 400°C), et broyage final.

Comme source de vanadium, on peut employer les combinaisons de vanadium pentavalent, telles que par exemple l'oxyde V2O5, ou des vanadates Na3VO4, NaVO3, NH4VO3.

Comme source d'halogénures, on utilise les dérivés des métaux alcalins; on se sert surtout des chlorures, bromures et iodures d'ammonium, de sodium ou de potassium: NH4Cl, NH4Br, NaCl, NaBr, NaI, KCl, KBr, KI, et de préférence les iodure et bromure de potassium.

Comme source de phosphate d'aluminium, on emploie principalement les sulfate, chlorure ou nitrate d'aluminium ainsi que les aluminates alcalins d'une part, et l'acide phosphorique et les phosphates alcalins (mono-, di-, tri-, pyro-, méta- phosphates des métaux alcalins) d'autre part.

Comme source de molybdène, on emploie surtout le molybdate de sodium Na2MoO4.2H2O, ou le molybdate d'ammonium (NH4)6Mo7O24.4H2O.

Comme source de calcium, on peut prendre tous les sels solubles, tels que par exemple le chlorure CaCl2.2H2O, le nitrate Ca(NO3)2.4H2O et l'acétate Ca(CH3COO)2.H2O.

Un autre avantage des pigments de l'invention est leur facilité de mise en oeuvre, par exemple dans des peintures en poudre, ainsi que leur excellente dispersibilité dans des formulations colorées.

Un dernier aspect de la présente invention concerne l'application des composés de l'invention dans la coloration des revêtements industriels, en particulier des résines, des laques et/ou des matières plastiques.

Les exemples suivants servent à illustrer les différents aspects non limitatifs de l'invention.


**Exemples**


*Exemple 1*


Dans un réacteur de 400 ml, on coule 8,06 g de nitrate de bismuth provenant d'une solution acide contenant 22,6 % de Bi(NO3)3. On règle le volume à 100 ml par addition d'eau et l'on coule en 30 min une solution aqueuse à 10% contenant 2,03 g d'iodure de potassium KI et 0,97 g de bromure de potassium KBr avec 1,8 g d'hydroxyde de sodium. Ensuite on continue à agiter pendant 5 h et on laisse reposer pendant une nuit, soit pendant ± 15 h. On remet en suspension et l'on coule successivement deux solutions aqueuses diluées, la première contenant 0,55g de sulfate d'aluminium et la seconde contenant 0,35 g de phosphate de sodium. Finalement on neutralise à un pH de 7,5 avec une solution aqueuse à 10% de carbonate de sodium. On agite 30 min à pH = 7,5. On obtient une suspension pigmentaire d'oxyiodobromure de bismuth de composition chimique Bi O I 0,6 Br 0,4.

Simultanément on prépare un vanadate de bismuth BiVO4 : dans un réacteur d'un litre, on coule 18 g d'une solution de nitrate de bismuth (solution acide contenant 22,6 % de Bi(NO3)3. On règle le volume à 100 ml par addition d'eau et l'on ajoute en 45 min une solution basique contenant 5,3 g de métavanadate d'ammonium NH4VO3, dont le volume a été porté à 250 ml par addition d'eau. On élève ensuite le pH à 7 par addition d'une solution d'hydroxyde de sodium. Ensuite on porte la température à 85°C en 30 min. On agite 30 min tout en maintenant la température à 85°C et le pH à 7. Lorsque le pH commence à s'élever un peu ( pH = 7,15 ) on agite encore 30 min.

On ajoute à ce moment-là la suspension pigmentaire d'oxoiodobromure de bismuth de composition [Bi O I 0,6 Br 0,4] et l'on continue l'agitation pendant 1 h en maintenant la température à 85°C.

On ajoute ensuite successivement les solutions aqueuses à 10% contenant :

   a) 0,5 g de molybdate de sodium
   b) 1,0 g de sulfate d'aluminium
   c) 0,3 g de chlorure de calcium
   d) 0,7 g de phosphate de sodium

Finalement on neutralise avec une solution aqueuse à 10% contenant 3 g de carbonate de sodium. Après filtration, lavage à l'eau, séchage et broyage on obtient une poudre pigmentaire jaune orangé.

*Exemple 2*

Dans un réacteur de 2 l, on coule 48,06 g de nitrate de bismuth provenant d'une solution acide contenant 22,6 % de Bi(NO3)3. On règle le volume à 500ml par addition d'eau et on coule en 45 min une solution aqueuse à 10% contenant 11,11 g d'iodure de potassium et 6,52 g de bromure de potassium avec 10,65g d'hydroxyde de sodium. On continue à agiter pendant 5h et on laisse reposer pendant une nuit. On remet en suspension et l'on coule deux solutions aqueuses diluées, la première contenant 3,25 g de sulfate d'aluminium et la seconde 2,135 g de phosphate de sodium. On neutralise à un pH = 7,5 avec une solution aqueuse à 10% de soude caustique. On agite encore 30 min à pH = 7,5. On obtient une suspension pigmentaire d'oxyiodobromure de composition chimique Bi O I 0,55 Br 0,45.

Simultanément on fabrique du vanadate de bismuth : dans un réacteur de 5 l on introduit 106,6 g de nitrate de bismuth (solution acide contenant 22,6% de Bi(NO3)3). On règle le volume à 750 ml par addition d'eau et on ajoute en 45 min une solution basique contenant 31,4 g de métavanadate d'ammonium, dont le volume a été porté à 1500 ml par addition d'eau. On porte ensuite le pH à 7 par addition d'une solution d'hydroxyde de sodium à 10%. On porte alors la température à 85°C en 1h. On agite 30 min tout en maintenant la température et le pH. Lorsque le pH commence à s'élever un peu, on agite encore pendant 30 min.

On ajoute alors la suspension pigmentaire d'oxoiodobromure de bismuth de composition [Bi O I 0,55 Br O, 45] et on agite pendant 1h en maintenant la température à 85°C.

On ajoute successivement les solutions aqueuses à 10% contenant :

   a) 2,2 g de molybdate d'ammonium
   b) 6,0 g de sulfate d'aluminium
   c) 1,85 g de chlorure de calcium
   d) 4,0 g de phosphate de sodium

On neutralise avec une solution aqueuse à 10% de carbonate de sodium. Après filtration, lavage à l'eau, séchage et broyage on obtient une poudre pigmentaire jaune orangé clair.

*Exemple 3*

On reprend le mode opératoire de l'exemple 1 pour préparer un oxoiodobromure de bismuth de composition chimique [Bi O I 0,6 Br O,4]. Dans un réacteur de 500 ml, on coule 9,94 g de nitrate de bismuth provenant d'une solution acide contenant 22,6% de Bi(NO3)3. On règle le volume à 150 ml par addition d'eau et on coule en 30 min une solution aqueuse à 10% contenant 2,50 g d'iodure de potassium et 1,12 g de bromure de potassium avec 2,15 g d'hydroxyde de sodium. Ensuite on continue à agiter pendant 5 h et on laisse reposer pendant une nuit. On remet en suspension et on coule successivement deux solutions aqueuses diluées, la première contenant 0,68 g de sulfate d'aluminium et la seconde contenant 0,43 g de phosphate de sodium. Finalement on neutralise à un pH de 7,5 avec une solution aqueuse à 10% de carbonate de sodium. On agite 30 min à pH = 7,5. On obtient une suspension pigmentaire d'oxoiodobromure de bismuth de composition chimique [Bi O I 0,6 Br 0,4].

On prépare également un vanadate de bismuth BiVO4 : dans un réacteur de 2 litres, on coule 28,8 g d'une solution de nitrate de bismuth (contenant 22,6 % de Bi(NO3)3. On règle le volume à 200ml par addition d'eau et l'on ajoute en 45 min une solution aqueuse basique contenant 13,33 g de vanadate de sodium Na3VO4 dont le volume a été porté à 350 ml par addition d'eau. On porte ensuite le pH à 7 par addition d'hydroxyde de sodium. Puis on élève la température à 90°C en 45 min. On agite 30 min en maintenant la température et le pH ( t = 85°C, pH = 7 ). Lorsque le pH commence à s'élever un peu, on agite encore pendant 30 min.

On ajoute la suspension pigmentaire d'oxoiodobromure de bismuth de composition [Bi O I 0,6 Br 0,4] et on continue à agiter pendant 1 h en maintenant la température à 90°C.

On ajoute ensuite successivement les solutions aqueuses à 10% contenant :

a) 0,77 g de molybdate de sodium
b) 1,50 g de sulfate d'aluminium
c) 0,48 g de chlorure de calcium
d) 1,01 g de phosphate de sodium

Finalement on neutralise avec une solution aqueuse à 10% de carbonate de sodium. Après filtration, lavage à l'eau, séchage et broyage on obtient une poudre pigmentaire jaune orangé clair.

*Exemple 4* (Application dans une peinture à solvant)

Dans petit pot de 100 ml, on pèse :

15 g d'une solution de liant
45 g de billes de verre de 3 mm de diamètre
15 g de pigment

Ce mélange est secoué pendant une heure dans un appareil de dispersion (Skandex).

Après cette opération de dispersion, la pâte est refroidie à température normale et on y ajoute :

30 g de complément de liant

On agite à nouveau dans un Skandex pendant 5 minutes.

Solution de liant : résine alkyde courte en huile, sans acides gras séchant à l'air, en solution dans le xylène.

Complément de liant ( à 56,5% de matières sèches ) : mélange de résine alkyde courte en huile et de résine de mélamine dans un rapport 75 : 25, en solution dans un mélange 30/70 de xylène/Solvesso 100.

La peinture ainsi réalisée est alors appliquée sur une éprouvette métallique et l'on cuit dans une étuve ventilée pendant 30 minutes à 120°C.

Avec les pigments des exemples précédents, on obtient ainsi des plaquettes de teinte jaune orangé. Le test d'exposition à la lumière " QUV " pendant 200 heures donne les résultats suivants.

TABLEAU I

| Delta E* obtenu par mesure au spectrocolorimètre | |
|---|---|
| Pigment | **Delta E*** |
| Pigment selon l'invention (1-n) {BiVO4}.n{BIOX} | 1.10 |
| P.Y.184 BiVO4 | 1.56 |

La résistance à la lumière est d'autant meilleure que le delta E* est petit.

*Exemple 5* (Application dans une peinture en poudre)

On réalise un mélange homogène de:

637,0 g de résine de polyester
049,0 g de TGIC (Tri-Glycidyl Iso-Cyanurate)
010,5 g d'agent d'écoulement
003,5 g d'agent de dégazage
300,0 g de pigment

On introduit ce mélange dans un extrudeuse à double vis tournant à 450 T/min. On y règle la température de 90 à 95°C. Le produit extrudé et refroidi est broyé dans un microniseur tournant à 13000 T/min, et est passé au travers d'un fin tamis ( 100 µ ). On applique ensuite la poudre sur une éprouvette métallique par pistolage électrostatique (corona) et l'on cuit pendant 10 min à 200°C. On obtient ainsi une plaquette recouverte d'un feuil de peinture coloré.

Si l'on désire réaliser une nuance dégradée, on remplace dans la formule les 300 g de pigment par : 30 g de pigment + 270 g de dioxyde de titane.

Avec les pigments de l'invention, on obtient des plaquettes de teinte jaune orangé. Leur solidité à la lumière est excellente; le test d'exposition à l'"EMMAQUA" pendant 55 jours donne les résultats suivants (cf. tableau II) :

La résistance à la lumière est d'autant meilleure que le delta E* est petit

TABLEAU II

| Delta E* obtenu par mesure au spectrophotocolorimètre | | |
|---|---|---|
| | Rapport Pigment/TiO2 = 100/0 | Rapport Pigment/TiO2 = 10/90 |
| Pigment selon l'invention | 0.21 | 0.38 |
| P.Y.184 BiVO4 | 1.09 | 1.82 |
| P.Y.139 jaune d'isoindoline | 1.61 | 3.07 |
| P.Y.170 jaune diarylide | 6.13 | 19.73 |

Cette solidité exceptionnelle n'est jamais obtenue avec d'autres pigments (organiques) de teinte jaune orangé (cf. tableau II ci-dessus).

*Exemple 6* (Préparation d'un pigment jaune orangé enrobé de silice)

Dans un disperseur contenant 0,75 l d'eau, on ajoute sous agitation 100 g de pigment fabriqué selon l'exemple 1. On agite très vigoureusement pendant 2 à 3 h pour obtenir une bonne dispersion du pigment.

On met cette suspension dans un réacteur de 5 litres et on règle le volume à 3 litres par addition d'eau chaude. Sous agitation constante on porte la température à 90°C et l'on ajuste le pH à une valeur de 9. On maintient la température de 90°C tout au long de la préparation.

Ensuite on ajoute en 30 min une solution aqueuse basique de silicate de sodium (contenant 25 g de SiO2 ). Après avoir agité 30 min, le pH étant égal à 10, on coule goutte à goutte pendant 4 heures une solution aqueuse diluée d'acide sulfurique à 3,7%. On veille à ce que le pH de la suspension ne soit pas inférieur à 6,5-7,0 et l'on agite encore pendant 30 min. Puis on ajoute successivement 10 g de nitrate de zinc Zn(NO3)2.6H2O dans 100 ml d'eau et 9,6 g de tétraborate de sodium Na2B4O7.10H2O (borax). On veille à ce que le pH soit voisin de 7,0 et l'on agite encore pendant 30 min.

Après filtration, lavage, séchage et broyage on obtient un pigment de bismuth jaune orangé pourvu d'une couche extérieure de silice, revêtue de zinc et de bore (25 à 30% ).

*Exemple 7* (Application en matières plastiques)

La mesure de la résistance à la chaleur des pigments préparés selon la présente invention est faite de la manière suivante :

on réalise un prémélange en mixant 60 % de pigment à base de vanadate de bismuth avec 30 % de polyéthylène linéaire à basse densité (par exemple LL6201RQ d'Exxon) et 10 % de cire de polyéthylène (par exemple AC8A). Ce prémélange est versé dans une extrudeuse à double vis (par exemple Collin) tournant à 300 T/min et chauffée à 150°C. Le tout est extrudé, refroidi et granulé. On obtient ainsi un mélange-maître que l'on dilue dans du polyéthylène à haute densité (par exemple ELTEX A4090) afin d'obtenir des granulés de mélange-maître dilué avec un taux de pigmentation de 0,5 %.

Ensuite les granulés sont passés dans une presse à injection à des températures variant de 200°C à 300°C ou plus, avec des temps de rétention de 30 sec à 200°C et de 5 minutes à 200°, 210°, 220°..., 300°C ou plus. On injecte dans une moule qui fournit des éprouvettes de plastique coloré dont on détermine le noircissement par mesure spectrophotocolorimétrique, en prenant comme standard de comparaison l'éprouvette de 30 sec à 200°C. La température de résistance est obtenue lorsque le seuil de dE* = 3,0 unités est dépassé (DIN 53772).

Les valeurs du tableau III illustrent les résistances à la chaleur d'un pigment selon l'invention ( exemple 7 ), d'un oxyhalogénure de bismuth ( exemple 8 ) et d'un vanadate de bismuth, traités similairement à la silice.

On voit que la résistance à la chaleur d'un pigment selon l'invention est d'environ 300°C.

TABLEAU III

| Delta E* obtenu par mesure au spectrophotocolorimètre | | | | | | |
|---|---|---|---|---|---|---|
| Pigment | DeltaE* à 250°C | DeltaE* à 260°C | DeltaE* à 270°C | DeltaE* à 280°C | DeltaE* à 290°C | DeltaE* à 300°C |
| Exemple 6 | 0.81 | 1.43 | 1.54 | 1.86 | 2.54 | 3.10 |
| BiVO4 (PY184) traité à la silice | - | 0.65 | 0.78 | 1.40 | 1.90 | 2.90 |

## Revendications

1. Pigments minéraux de teinte jaune vif clair à orangé à base de bismuth, **caractérisés en ce qu'**ils répondent à la formule générale suivante :

$$Bi\ V_{(1-n)}\ X_n\ O_{(4-3n)}$$

dans laquelle X est un halogène ou un mélange d'halogènes et n est supérieur à 0 et inférieur à 1.

2. Pigments selon la revendication 1, **caractérisés en ce que** X est un halogène ou un mélange d'halogènes choisis parmi le chlore, le brome ou l'iode, répondant à la formule :

$$[Cl_{(p)}\ Br_{(q)}\ I_{(1-p-q)}]n$$

n étant supérieur à 0 et inférieur à 1, de préférence compris entre 0,25 et 0,40,
p variant de 0 à 0,3,
q variant de 0 à 0,8,
et p + q variant de 0,1 à 0,8,
de préférence p étant égal à 0 et q étant compris entre 0,35 et 0,55.

3. Pigments selon la revendication 1 ou 2, **caractérisés en ce qu'**ils sont enrobés de une ou plusieurs couches successives à base d'oxydes, d'hydroxydes, d'hydrates, de phosphates, de borates, de molybdates et/ou de silicates des éléments des groupes II, III et IV du tableau de Mendeleïev, en particulier de différents composés à base de titane, d'aluminium, de calcium, de zinc, de terres rares et/ou de silicium.

4. Procédé d'obtention de pigments selon l'une quelconque des revendications 1 à 3, **caractérisé en ce qu'**il comprend les étapes suivantes :

(i) une précipitation d'une solution de nitrate de bismuth à l'aide d'une solution aqueuse contenant des halogènes (de préférence bromure et iodure) de façon à obtenir un précipité d'oxyhalogénures de bismuth,
(ii) une formation d'un précipité de vanadate de bismuth pur obtenu par réaction d'une solution acide de nitrate de bismuth avec une solution aqueuse basique contenant au moins des ions vanadates et éventuellement des ions phosphates, silicates, molybdates, et/ou tungstate,
(iii) un mélange en milieu aqueux dudit précipité de vanadate de bismuth et dudit précipité d'oxyhalogénures de bismuth de façon à obtenir une suspension de particules pigmentaires homogènes,
(iv) éventuellement un enrobage desdites particules pigmentaires par un ou plusieurs dépôts successifs d'enrobage à base d'oxydes, d'hydroxydes, d'hydrates, de carbonates, de phosphates, de borates, de molybdates et/ou de silicates des éléments des groupes II, III et IV du tableau de Mendeleïev,
(v) une séparation des particules pigmentaires enrobées des eaux-mères, lesquelles particules pigmentaires sont ensuite lavées, séchées et broyées.

5.  Procédé selon la revendication 4, **caractérisé en ce que** le mélange de l'étape (iii) s'effectue en agitant la solution aqueuse pendant un temps compris entre 30 minutes et 1 heure 30, de préférence d'environ 1 heure.

6.  Procédé selon la revendication 5, **caractérisé en ce que** l'agitation s'effectue à une température entre 70°C et 100°C, de préférence de l'ordre de 85°C.

7.  Procédé selon la revendication 3, **caractérisé en ce que** l'agitation s'effectue à un pH de l'ordre de 7.

8.  Procédé selon la revendication 4, **caractérisé en ce que** la précipitation de l'oxyhalogénure de bismuth dans l'étape (i) s'effectue à une température comprise entre 15 et 90°C.

9.  Procédé selon la revendication 4, **caractérisé en ce que** alors la formation du précipité de vanadate de bismuth dans l'étape (ii) s'effectue à une température comprise entre 20 et 100°C, et de préférence entre 65 et 95°C.

10. Procédé selon la revendication 4, **caractérisé en ce que** la précipitation de l'oxyhalogénure de bismuth dans l'étape (i) s'effectue à un pH final compris entre 6,5 et 7,5.

11. Procédé selon la revendication 4, **caractérisé en ce que** la formation du précipité de vanadate de bismuth dans l'étape (ii) s'effectue à un pH final compris entre 6,5 et 7,5.

12. Application des pigments selon l'une quelconque des revendications 1 à 3 ou obtenus selon l'une quelconque des revendications 4 à 11, pour colorer des matières plastiques, des peintures et/ou des laques.

**Patentansprüche**

1.  Mineralische Pigmente von leuchtender hellgelber bis gelboranger Farbe auf der Basis von Wismut, **dadurch gekennzeichnet, dass** sie der folgenden allgemeinen Formel entsprechen:

$$Bi\ (V_{(1-n)}\ X_n\ O_{(4-3n)})$$

in welcher X ein Halogen oder ein Halogengemisch ist und n größer als 0 und kleiner als 1 ist.

2.  Pigmente nach Anspruch 1, **dadurch gekennzeichnet, dass** X ein Halogen oder ein Halogengemisch, ausgewählt aus Chlor, Brom oder Iod, ist, das folgender Formel entspricht:

$$[Cl_{(p)}\ Br_{(q)}\ I_{(1-p-q)}]n$$

wobei

n größer als 0 und kleiner als 1 ist, vorzugsweise im Bereich zwischen 0,25 und 0,40,
p zwischen 0 und 0,3 variiert,
q zwischen 0 und 0,8 variiert,
und p + q zwischen 0,1 und 0,8 variiert,
p vorzugsweise gleich 0 ist und q zwischen 0,35 und 0,55 ist.

3.  Pigmente nach Anspruch 1 oder 2, **dadurch gekennzeichnet, dass** sie mit einer oder mehreren aufeinander folgenden Schichten auf der Basis von Oxiden, Hydroxiden, Hydraten, Phosphaten, Boraten, Molybdaten und/oder Silikaten der Elemente der Gruppen II, III IV der Mendeleev-Tabelle umhüllt sind, insbesondere verschiedenen Verbindungen auf der Basis von Titan, Aluminium, Kalzium, Zink, seltenen Erden und/oder Silizium.

**EP 1 101 801 B1**

4. Verfahren zum Herstellen von Pigmenten nach irgendeinem der Ansprüche 1 bis 3, **dadurch gekennzeichnet, dass** es folgende Schritte umfasst:

(i) Ausfällen einer Wismutnitratlösung mit Hilfe einer wässerigen Lösung, die Halogene (vorzugsweise Bromid oder Iodid) enthält, um einen Wismutoxyhalogenidniederschlag zu erhalten,

(ii) Bilden eines Niederschlags von reinem Wismutvanadat, hergestellt durch Reaktion einer Wismutnitratsäurelösung mit einer wässerigen basischen Lösung, die mindestens Vanadatione und eventuell Phosphat-, Silikat-, Molybdat- und/oder Wolframatione enthält,

(iii) Mischen des besagten Wismutvanadatniederschlags und des besagten Wismutoxyhalogenidniederschlags in einem wässerigen Medium, um eine Suspension homogener Pigmentpartikel zu erhalten,

(iv) eventuelles Umhüllen der besgaten Pigmentpartikel mit einem oder mehreren aufeinander folgenden Umhüllungsansätzen auf der Basis von Oxiden, Hydroxiden, Hydraten, Karbonaten, Phosphaten, Boraten, Molybdaten und/oder Silikaten der Elemente der Gruppen II, III und IV der Mendeleev-Tabelle,

(v) Trennen der mit der Mutterlauge umhüllten Pigmentpartikel, wobei die Pigmentpartikel anschließend gewaschen, getrocknet und gemahlen werden.

5. Verfahren nach Anspruch 4, **dadurch gekennzeichnet, dass** das Gemisch vom Schritt (iii) durch Rühren der wässerigen Lösung während einer Zeit erfolgt, die zwischen 30 Minuten und 1 Stunde 30 Minuten, vorzugsweise ungefähr 1 Stunde, beträgt.

6. Verfahren nach Anspruch 5, **dadurch gekennzeichnet, dass** das Rühren bei einer Temperatur zwischen 70 °C und 100 °C, vorzugsweise im Bereich von 85 °C, erfolgt.

7. Verfahren nach Anspruch 5, **dadurch gekennzeichnet, dass** das Rühren bei einem pH im Bereich von 7 erfolgt.

8. Verfahren nach Anspruch 4, **dadurch gekennzeichnet, dass** der Wismutoxyhalogenidniederschlag in Schritt (i) bei einer Temperatur zwischen 15 und 90 °C erfolgt.

9. Verfahren nach Anspruch 4, **dadurch gekennzeichnet, dass** das Bilden des Wismutvanadatniederschlags in Schritt (ii) bei einer Temperatur zwischen 20 und 100 °C und vorzugsweise zwischen 65 und 95 °C erfolgt.

10. Verfahren nach Anspruch 4, **dadurch gekennzeichnet, dass** der Wismutoxyhalogenidniederschlag in Schritt (i) bei einem endgültigen pH im Bereich von 6,5 bis 7,5 erfolgt.

11. Verfahren nach Anspruch 4, **dadurch gekennzeichnet, dass** das Bilden des Wismutvanadatniederschlags in Schritt (ii) bei einem endgültigen pH im Bereich von 6,5 und 7,5 erfolgt.

12. Anwendung der Pigmente nach irgendeinem der Ansprüche 1 bis 3 oder erhalten nach irgendeinem der Ansprüche 4 bis 11 zum Färben von Kunststoffen, Farben und/oder Lacken.

**Claims**

1. Bismuth-based inorganic pigments with a light bright yellow to orange colour, **characterised in that** they correspond to the following general formula:

$$Bi\ V_{(1-n)}\ X_n\ O_{(4-3n)}$$

in which X is a halogen or a mixture of halogens and n is greater than 0 and less than 1.

2. The pigments according to claim 1, **characterised in that** X is a halogen or a mixture of halogens selected from the group consisting of chlorine, bromine or iodine and corresponding to the formula:

$$[Cl_{(p)} Br_{(q)} I_{(1-p-q)}]n$$

n being greater than 0 and less than 1, preferably comprised between 0.25 and 0.40,
p varying from 0 to 0.3,
q varying from 0 to 0.8,
and p + q varying from 0.1 to 0.8,

preferably p being equal to 0 and q being comprised between 0.35 and 0.55.

3. The pigments according to claim 1 or 2, **characterised in that** they are coated with one or more successive layers based on oxides, hydroxides, hydrates, phosphates, borates, molybdates and/or silicates of elements from groups II, III and IV of the Mendeleiev table, in particular on various compounds based on titanium, aluminium, calcium, zinc, rare earths and/or silicon.

4. A process for obtaining pigments according to any of the claims 1 to 3, **characterised in that** it comprises the following steps:

(i) precipitating a bismuth nitrate solution using an aqueous solution containing halogens (preferably bromide and iodide), so as to obtain a precipitate of bismuth oxyhalides,
(ii) forming a pure bismuth vanadate precipitate, obtained by reaction of an acid bismuth nitrate solution with a basic aqueous solution containing at least vanadate ions and optionally phosphate, silicate, molybdate and/or tungstate ions,
(iii) mixing said bismuth vanadate precipitate and said precipitate of bismuth oxyhalides in an aqueous medium, so as to obtain a suspension of homogeneous pigmentary particles,
(iv) optionally coating said pigmentary particles with one or more successive coating deposits based on oxides, hydroxides, hydrates, carbonates, phosphates, borates, molybdates and/or silicates of elements from groups II, III and IV of the Mendeleiev table,
(v) separating the coated pigmentary particles from the mother liquors, which pigmentary particles are subsequently washed, dried and ground.

5. The process according to claim 4, **characterised in that** the mixing of stage (iii) is carried out by stirring the aqueous solution for a time comprised between 30 minutes and 1 hour 30 minutes, preferably about 1 hour.

6. The process according to claim 5, **characterised in that** the stirring is carried out at a temperature between $70°C$ and $100°C$, preferably of the order of $85°C$.

7. The process according to claim 5, **characterised in that** the stirring is carried out at a pH of the order of 7.

8. The process according to claim 4, **characterised in that** the precipitation of the bismuth oxyhalide in stage (i) is carried out at a temperature comprised between 15 and $90°C$.

9. The process according to claim 4, **characterised in that** the formation of the bismuth vanadate precipitate in stage (ii) is carried out at a temperature comprised between 20 and $100°C$, and preferably between 65 and $95°C$.

10. The process according to claim 4, **characterised in that** the precipitation of the bismuth oxyhalide in stage (i) is carried out at a final pH comprised between 6.5 and 7.5.

11. The process according to claim 4, **characterised in that** the formation of the bismuth vanadate precipitate in stage (ii) is carried out at a final pH comprised between 6.5 and 7.5.

12. Application of the pigments according to any of the claims 1 to 3 or obtained according to any of the claims 4 to 11, to colour plastics, paints and/or lacquers.